# EUROPEAN PATENT APPLICATION

(11) **EP 3 018 557 A1**
(43) Date of publication of application: **11.05.2016**
(21) Application number: 15192850.4
(22) Date of filing: 03.11.2015
(51) Int. Cl.: G06F 1/16, G06Q 20/32, H04B 1/3827

(54) **BARCODE SCANNING SYSTEM USING WEARABLE DEVICE WITH EMBEDDED CAMERA**

(30) Priority: 05.11.2014 US 201414533319
(71) Applicant: Hand Held Products, Inc., Fort Mill, SC 29707 (US)
(72) Inventor: TODESCHINI, Erik, Morris Plains, NJ New Jersey 07950 (US)
(74) Representative: Houghton, Mark Phillip

(57) **Abstract**

A smartwatch is provided with an embedded camera; barcode decoding software; a user interface system, the user interface system being provided with a visual display on the smartwatch; and a processor communicatively coupled to the camera, the user interface system, and the barcode decoding software. The processor is configured for a barcode scanning and decoding operation. The barcode scanning and decoding operation is configured for: triggering a view finder on the smartwatch, aligning a barcode in the view finder; capturing images of the barcode aligned in the view finder with the camera, feeding the barcode images to barcode decoding software; and sending the decoded barcode information to the visual display.

## Description

### FIELD OF THE INVENTION

The present invention relates to wearable devices with barcode scanning and decoding capability and the barcode scanning process and system on the wearable device platform.

### BACKGROUND

Generally speaking, smartwatches include embedded cameras. Many of the applications for using the camera images from a smartwatch are related to social media. Smartwatches may employ different operating systems (e.g., ANDROID™, iOS™, WINDOWS-PHONE™, etc.). These operating systems in conjunction with processors and wireless linking capability have not been exploited to their maximum potential with inventive applications.

Barcode scanning/decoding is often done with barcode-dedicated equipment. More recently, smartphones and tablets have been enabled to read some types of barcodes. For example, smartphones can scan a QR code that directs a browser to a website.

However, the capability of easily scanning, decoding, and displaying barcodes with a less bulky device in an intuitive way is still elusive.

Therefore, a need exists for a barcode scanning system which is not bulky, which is intuitive to use, is resident on a wearable device, and can communicate with, or be part of a larger system.

### SUMMARY

Accordingly, in one aspect, the present invention embraces a smartwatch with an embedded camera, which cooperatively works with barcode decoding software.

In another aspect, the present invention embraces a process for imaging, decoding, and displaying barcodes with a wearable device.

In yet another aspect, the present invention embraces a barcode scanning system resident on a wearable device.

In an exemplary embodiment, the present invention is comprised of a smartwatch provided with an embedded camera; barcode decoding software; a user interface system, the user interface system being provided with a visual display on the smartwatch; and a processor communicatively coupled to the camera, the user interface system, and the barcode decoding software. The processor is configured for a barcode scanning and decoding operation. The barcode scanning and decoding operation is configured for: triggering a view finder on the smartwatch, aligning a barcode in the view finder; capturing images of the barcode aligned in the view finder with the camera, feeding the barcode images to barcode decoding software; and sending the decoded barcode information to the visual display.

In another aspect, the smartwatch is provided with a wireless communication system. The processor is communicatively coupled to wireless communication system.

In another aspect, the processor is further configured for feeding the barcode images to a remote electronic device and for receiving decoded barcode information from the remote electronic device.

In a further aspect, the processor is configured for sharing and receiving data via RF links with remote electronic devices.

In yet another aspect, the smartwatch has an operating system. The processor is an application within the operating system.

In another aspect, the barcode decoding software is capable of discerning different types of barcode symbologies and optical character recognition text.

In another exemplary embodiment, the present invention comprises a process for imaging and decoding a barcode with a wearable device. The process is comprised of the following steps: triggering a wearable device to display a view finder; aligning a barcode in the view finder; capturing images of the barcode with a camera on the wearable device; feeding camera frames of the barcode images to barcode decoding software; decoding the barcode; sending the decoded barcode information to the wearable device display; and displaying decoded barcode information on the wearable device display.

In another aspect, the wearable device is a smartwatch.

In another aspect, the feeding step includes transmitting the barcode images to a remote device having the barcode decoding software.

In yet another aspect, the barcode decoding software is resident on the wearable device.

In another aspect, the triggering step is accomplished by a physical act by a wearer of the wearable device. The physical acts to trigger the display can include a voice command, a swiping motion of a stylus on the wearable device display, a display touch, a touch gesture, and a physical motion of the wearable device.

In another aspect, the triggering step is accomplished by a signal from a remote device to the wearable device.

In another aspect, the sending step further includes sending the decoded barcode information to a remote electronic device for display.

In another aspect, the sending step further includes sending the decoded barcode information to a remote device where the decoded barcode information is used for business logic purposes, but not necessarily displayed.

In another aspect, the process further includes the step of: notifying a wearer of the wearable device of a successful decoding of the barcode. The notifying step being accomplished by an indicator. The indicator can include an audible signal from the wearable device, a visual signal on the display of the wearable device, a haptic response from the wearable device and an audible signal from a remote device. The remote device is linked to the wearable device via an RF link.

In yet another exemplary embodiment, the present invention provides for a barcode scanning system which includes a smartwatch provided with an embedded camera, a user interface visual display, and an operating system which communicatively couples the user interface and the embedded camera. The barcode scanning system further includes decoding software. The decoding software is communicatively linked to the operating system. The operating system is configured for (i) triggering a view finder on the smartwatch visual display, (ii) aligning a barcode in the view finder; (iii) capturing images of the barcode aligned in the view finder with the camera, (iv) feeding the barcode images to the decoding software; and (v) sending the decoded barcode information to the visual display.

In another aspect of the barcode scanning system of the present invention, the decoding software is resident on the smartwatch.

In another aspect, the decoding software is on a remote electronic device.

In yet another aspect, the decoding software is capable of discerning different types of barcode symbologies and optical character recognition text.

In another aspect, triggering the viewfinder is initialized by a wearer of the smartphone by a physical action. The physical action can include a voice command, a swiping motion of a stylus on the smartwatch visual display, a display touch, a touch gesture, and a physical motion of the wearable device.

In another aspect, the operating system is communicatively linked to at least one remote electronic device via an RF signal.

In another aspect, triggering the viewfinder is initialized by a signal from a remote device to the operating system of the smartwatch.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 depicts a block diagram of a smartwatch in accordance with the present invention.
Figure 2 depicts a flowchart of a barcode imaging and decoding process on a wearable device according to the present invention.

### DETAILED DESCRIPTION

The present invention embraces a wearable device, a process, and a system for imaging, decoding, and displaying barcodes.

The present invention will now be described more fully hereinafter with reference to the accompanying drawings in which preferred embodiments of the invention are shown. This invention however may be embodied in many different forms and should not be construed as limited to the embodiments set forth herein. In the drawings, like numbers refer to like elements throughout.

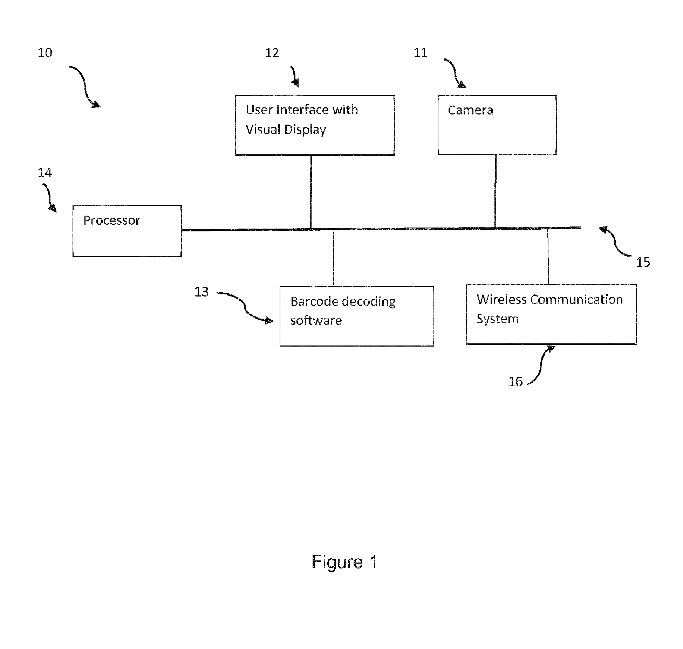

Referring to Figure 1, in an exemplary embodiment of the present invention, a smartwatch **10** is provided with an embedded camera **11,** a user interface **12** which includes a visual display, barcode decoding software **13,** and a processor **14.** The processor **14** communicatively links the camera **11,** the user interface **12,** and the barcode decoding software **13.** The processor **14** may be an application in an operating system (not shown) of the smartwatch **10.** The smartwatch **10** may be provided with a system bus **15** which assists the processor **14** to be communicatively linked to other components. There may also be other interface circuits and components, such as memory (not shown), and the like. The smartwatch **10** may also be provided with a wireless communication system **16.** The processor **14** is communicatively linked to the wireless communication system **16.** The processor **14** is configured for a process of scanning or imaging and decoding a barcode. The processor **14** is configured to trigger the user interface **12** to initialize a view finder on the visual display. The wearer of the smartwatch **10** then aligns the barcode in the visual display **12.** The camera **11** captures images of the barcode. These images are sent to barcode decoding software **13.** The barcode decoding software **13** is shown in the Figure as being resident on the smartwatch **10.** However, the barcode decoding software **13** may be on a remote electronic device (not shown) instead of or in addition to being resident on the smartwatch **10.** If the barcode decoding software **13** is on a remote electronic device, the processor **14** is configured to send and receive information via the wireless communication system **17** so that the barcode images can be sent to remote barcode decoding software, and decoded barcode information can be received on the smartwatch **10** and displayed on the user interface **12.**

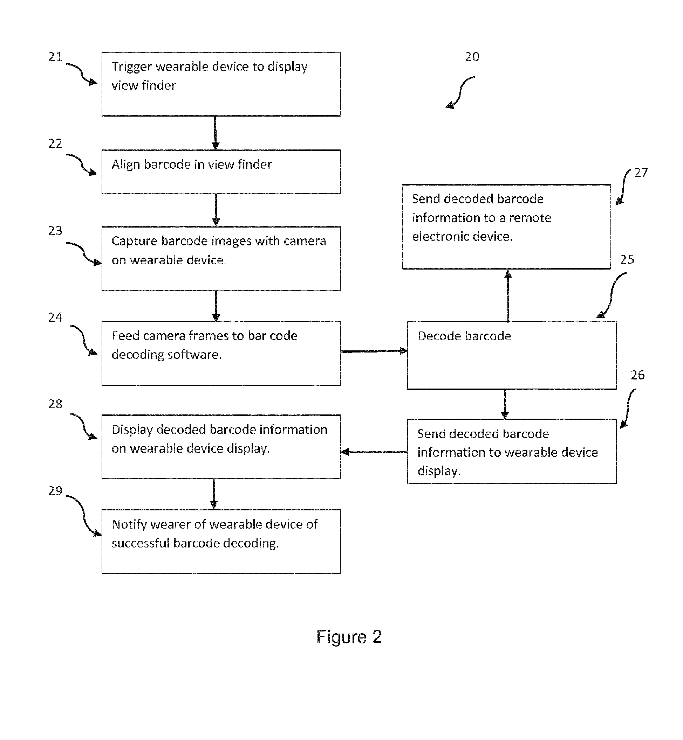

Referring now to Figure 2, in another exemplary embodiment of the present invention, a process **20** for imaging and decoding a barcode with a wearable device is provided. The wearable device is preferably a smartwatch, for example, the smartwatch **10** of Figure 1. The process **20** begins with step **21,** triggering the smartwatch to display a view finder. The triggering step may be accomplished by a physical action of the smartwatch wearer. For example, the smartwatch wearer may give a voice command, make a swiping motion with a stylus on the smartwatch display, make a display touch, make a touch gesture, or make a physical motion of the smartwatch, like shaking the smartwatch. Alternatively, the triggering step **21** may be initialized by a signal to the smartwatch from a remote electronic device.

After the view finder is displayed, in step **22** the wearer of the smartwatch aligns the barcode to be read in the view finder. Images of the barcode are captured in step **23.** As is known in the art, the camera on the smartwatch is provided with focusing and zooming capability. In step **24** the camera frames of the barcode are send to barcode decoding software, which may resident on the smartwatch, and/or on a remote electronic device. The barcode is decoded in step **25.** The decoded barcode information is sent, in step **26** to the smartwatch visual display. Alternatively, or in addition to step **26,** the decoded barcode information may be sent in step **27** to a remote electronic device for display, for storage in memory, or for some other purpose as in a business logic application. The remote electronic device, for example, may be a smartphone or a laptop computer, or any wireless enabled device.

In step **28,** the decoded barcode information is displayed on the visual display of the smartwatch. Step **29** the smartwatch notifies the wearer that the barcode has been decoded successfully. This notification could be in the form of a visual or audio indicator, for example, the indicator may be a visual signal from the smartwatch display, an audio signal from the smartwatch, a haptic response form the smartwatch, or even an audible signal from a remote device.

To supplement the present disclosure, this application incorporates entirely by reference the following commonly assigned patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,526;
U.S. Patent No. 8,798,367; U.S. Patent No. 8,807,431;
U.S. Patent No. 8,807,432; U.S. Patent No. 8,820,630;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2011/0202554;
U.S. Patent Application Publication No. 2012/0111946;
U.S. Patent Application Publication No. 2012/0138685;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0056285;
U.S. Patent Application Publication No. 2013/0070322;
U.S. Patent Application Publication No. 2013/0075168;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0200158;
U.S. Patent Application Publication No. 2013/0256418;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0278425;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306730;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0341399;
U.S. Patent Application Publication No. 2013/0342717;
U.S. Patent Application Publication No. 2014/0001267;
U.S. Patent Application Publication No. 2014/0002828;
U.S. Patent Application Publication No. 2014/0008430;
U.S. Patent Application Publication No. 2014/0008439;
U.S. Patent Application Publication No. 2014/0025584;
U.S. Patent Application Publication No. 2014/0027518;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061305;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0075846;
U.S. Patent Application Publication No. 2014/0076974;
U.S. Patent Application Publication No. 2014/0078341;
U.S. Patent Application Publication No. 2014/0078342;
U.S. Patent Application Publication No. 2014/0078345;
U.S. Patent Application Publication No. 2014/0084068;
U.S. Patent Application Publication No. 2014/0097249;
U.S. Patent Application Publication No. 2014/0098792;
U.S. Patent Application Publication No. 2014/0100774;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0108682;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0160329;
U.S. Patent Application Publication No. 2014/0166755;
U.S. Patent Application Publication No. 2014/0166757;
U.S. Patent Application Publication No. 2014/0166759;
U.S. Patent Application Publication No. 2014/0166760;
U.S. Patent Application Publication No. 2014/0166761;
U.S. Patent Application Publication No. 2014/0168787;
U.S. Patent Application Publication No. 2014/0175165;
U.S. Patent Application Publication No. 2014/0175169;
U.S. Patent Application Publication No. 2014/0175172;
U.S. Patent Application Publication No. 2014/0175174;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0203087;
U.S. Patent Application Publication No. 2014/0204268;
U.S. Patent Application Publication No. 2014/0214631;
U.S. Patent Application Publication No. 2014/0217166;
U.S. Patent Application Publication No. 2014/0217180;
U.S. Patent Application No. 13/367,978 for a *Laser Scanning Module Employing an Elastomeric U-Hinge Based Laser Scanning Assembly,* filed February 7, 2012 (Feng *et al*.);
U.S. Patent Application No. 29/436,337 for an *Electronic Device,* filed November 5, 2012 (Fitch et *al*.);
U.S. Patent Application No. 13/771,508 for an *Optical Redirection Adapter,* filed February 20, 2013 (Anderson);
U.S. Patent Application No. 13/852,097 for a *System and Method for Capturing and Preserving Vehicle Event Data,* filed March 28, 2013 (Barker *et al*.);
U.S. Patent Application No. 13/902,110 for a *System and Method for Display of Information Using a Vehicle-Mount Computer,* filed May 24, 2013 (Hollifield);
U.S. Patent Application No. 13/902,144, for a *System and Method for Display of Information Using a Vehicle-Mount Computer,* filed May 24, 2013 (Chamberlin);
U.S. Patent Application No. 13/902,242 for a *System For Providing A Continuous Communication Link With A Symbol Reading Device,* filed May 24, 2013 (Smith *et al*.);
U.S. Patent Application No. 13/912,262 for a *Method of Error Correction for 3D Imaging Device,* filed June 7, 2013 (Jovanovski *et al*.);
U.S. Patent Application No. 13/912,702 for a *System and Method for Reading Code Symbols at Long Range Using Source Power Control,* filed June 7, 2013 (Xian et *al*.);
U.S. Patent Application No. 29/458,405 for an *Electronic Device,* filed June 19, 2013 (Fitch et *al*.);
U.S. Patent Application No. 13/922,339 for a *System and Method for Reading Code Symbols Using a Variable Field of View,* filed June 20, 2013 (Xian et *al*.);
U.S. Patent Application No. 13/927,398 for a *Code Symbol Reading System Having Adaptive Autofocus,* filed June 26, 2013 (Todeschini);
U.S. Patent Application No. 13/930,913 for a *Mobile Device Having an Improved User Interface for Reading Code Symbols,* filed June 28, 2013 (Gelay *et al*.);
U.S. Patent Application No. 29/459,620 for an *Electronic Device Enclosure,* filed July 2, 2013 (London *et al*.);
U.S. Patent Application No. 29/459,681 for an *Electronic Device Enclosure,* filed July 2, 2013 (Chaney *et al*.);
U.S. Patent Application No. 13/933,415 for an *Electronic Device Case,* filed July 2, 2013 (London *et al*.);
U.S. Patent Application No. 29/459,785 for a *Scanner and Charging Base,* filed July 3, 2013 (Fitch *et al*.);
U.S. Patent Application No. 29/459,823 for a *Scanner,* filed July 3, 2013 (Zhou *et al*.);
U.S. Patent Application No. 13/947,296 for a *System and Method for Selectively Reading Code Symbols,* filed July 22, 2013 (Rueblinger et *al*.);
U.S. Patent Application No. 13/950,544 for a *Code Symbol Reading System Having Adjustable Object Detection,* filed July 25, 2013 (Jiang);
U.S. Patent Application No. 13/961,408 for a *Method for Manufacturing Laser Scanners,* filed August 7, 2013 (Saber *et al.);*
U.S. Patent Application No. 14/018,729 for a *Method for Operating a Laser Scanner,* filed September 5, 2013 (Feng et *al.);*
U.S. Patent Application No. 14/019,616 for a *Device Having Light Source to Reduce Surface Pathogens,* filed September 6, 2013 (Todeschini);
U.S. Patent Application No. 14/023,762 for a *Handheld Indicia Reader Having Locking Endcap,* filed September 11, 2013 (Gannon);
U.S. Patent Application No. 14/035,474 for *Augmented-Reality Signature Capture,* filed September 24, 2013 (Todeschini);
U.S. Patent Application No. 29/468,118 for an *Electronic Device Case,* filed September 26, 2013 (Oberpriller *et al*.);
U.S. Patent Application No. 14/055,234 for *Dimensioning System,* filed October 16, 2013 (Fletcher);
U.S. Patent Application No. 14/053,314 for *Indicia Reader,* filed October 14, 2013 (Huck);
U.S. Patent Application No. 14/065,768 for *Hybrid System and Method for Reading Indicia,* filed October 29, 2013 (Meier *et al.);*
U.S. Patent Application No. 14/074,746 for *Self-Checkout Shopping System,* filed November 8, 2013 (Hejl *et al*.);
U.S. Patent Application No. 14/074,787 for *Method and System for Configuring Mobile Devices via NFC Technology,* filed November 8, 2013 (Smith et *al*.);
U.S. Patent Application No. 14/087,190 for *Optimal Range Indicators for Bar Code Validation,* filed November 22, 2013 (Hejl) ;
U.S. Patent Application No. 14/094,087 for *Method and System for Communicating Information in an Digital Signal,* filed December 2, 2013 (Peake *et al*.);
U.S. Patent Application No. 14/101,965 for *High Dynamic-Range Indicia Reading System,* filed December 10, 2013 (Xian);
U.S. Patent Application No. 14/150,393 for *Indicia-reader Having Unitary Construction Scanner,* filed January 8, 2014 (Colavito et *al*.);
U.S. Patent Application No. 14/154,207 for *Laser Barcode Scanner,* filed January 14, 2014 (Hou *et al*.);
U.S. Patent Application No. 14/165,980 for *System and Method for Measuring Irregular Objects with a Single Camera* filed January 28, 2014 (Li et *al*.);
U.S. Patent Application No. 14/166,103 for *Indicia Reading Terminal Including Optical Filter* filed January 28, 2014 (Lu *et al.*);
U.S. Patent Application No. 14/200,405 for *Indicia Reader for Size-Limited Applications* filed March 7, 2014 (Feng *et al*.);
U.S. Patent Application No. 14/231,898 for *Hand-Mounted Indicia-Reading Device with Finger Motion Triggering* filed April 1, 2014 (Van Horn *et al*.);
U.S. Patent Application No. 14/250,923for *Reading Apparatus Having Partial Frame Operating Mode* filed April 11, 2014, (Deng *et al*.);
U.S. Patent Application No. 14/257,174 for *Imaging Terminal Having Data Compression* filed April 21, 2014, (Barber *et al*.);
U.S. Patent Application No. 14/257,364 for *Docking System and Method Using Near Field Communication* filed April 21, 2014 (Showering);
U.S. Patent Application No. 14/264,173 for *Autofocus Lens System for Indicia Readers* filed April 29, 2014 (Ackley *et al*.);
U.S. Patent Application No. 14/274,858 for *Mobile Printer with Optional Battery Accessory* filed May 12, 2014 (Marty *et al.);*
U.S. Patent Application No. 14/277 ,337 *for MULTIPURPOSE OPTICAL READER, filed May 14, 2014* (*Jovanovski et al.);*
U.S. Patent Application No. 14/283,282 *for TERMINAL HAVING ILLUMINATION AND FOCUS CONTROL filed May 21, 2014 (Liu et al*.);
U.S. Patent Application No. 14/300,276 *for METHOD AND SYSTEM FOR CONSIDERING INFORMATION ABOUT AN EXPECTED RESPONSE WHEN PERFORMING SPEECH RECOGNITION, filed June 10, 2014 (Braho et al*.);
U.S. Patent Application No. 14/305,153 *for INDICIA READING SYSTEM EMPLOYING DIGITAL GAIN CONTROL filed June 16, 2014 (Xian et al.);*
U.S. Patent Application No. 14/310,226 *for AUTOFOCUSING OPTICAL IMAGING DEVICE filed June 20, 2014 (Koziol* et *al*.);
U.S. Patent Application No. 14/327,722 *for CUSTOMER FACING IMAGING SYSTEMS AND METHODS FOR OBTAINING IMAGES filed July 10, 2014 (Oberpriller et al,);*
U.S. Patent Application No. 14/327,827 for a MOBILE-PHONE ADAPTER FOR ELECTRONIC TRANSACTIONS, filed July 10, 2014 (Hejl);
U.S. Patent Application No. 14/329,303 for CELL PHONE READING MODE USING IMAGE TIMER filed July 11, 2014 (Coyle);
U.S. Patent Application No. 14/333,588 for SYMBOL READING SYSTEM WITH INTEGRATED SCALE BASE filed July 17, 2014 (Barten);
U.S. Patent Application No. 14/334,934 for a SYSTEM AND METHOD FOR INDICIA VERIFICATION, filed July 18, 2014 (Hejl);
U.S. Patent Application No. 14/336,188 for METHOD OF AND SYSTEM FOR DETECTING OBJECT WEIGHING INTERFERENCES, Filed July 21, 2014 (Amundsen et al.);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/340,716 for an OPTICAL IMAGER AND METHOD FOR CORRELATING A MEDICATION PACKAGE WITH A PATIENT, filed July 25, 2014 (Ellis);
U.S. Patent Application No. 14/342,544 for *Imaging Based Barcode Scanner Engine with Multiple Elements Supported on a Common Printed Circuit Board* filed March 4, 2014 (Liu et *al.);*
U.S. Patent Application No. 14/345,735 for *Optical Indicia Reading Terminal with Combined Illumination* filed March 19, 2014 (Ouyang);
U.S. Patent Application No. 14/336,188 for METHOD OF AND SYSTEM FOR DETECTING OBJECT WEIGHING INTERFERENCES, Filed July 21, 2014 (Amundsen et al.);
U.S. Patent Application No. 14/355,613 for *Optical Indicia Reading Terminal with Color Image Sensor* filed May 1, 2014 (Lu et *al.);*
U.S. Patent Application No. 14/370,237 *for WEB-BASED SCAN-TASK ENABLED SYSTEM AND METHOD OF AND APPARATUS FOR DEVELOPING AND DEPLOYING THE SAME ON A CLIENT-SERVER NETWORK filed 07*/*02*/*2014 (Chen* et *al.*);
U.S. Patent Application No. 14/370,267 *for INDUSTRIAL DESIGN FOR CONSUMER DEVICE BASED SCANNING AND MOBILITY, filed July 2, 2014 (Ma et al.);*
U.S. Patent Application No. 14/376,472*, for an ENCODED INFORMATION READING TERMINAL INCLUDING HTTP SERVER, filed 08-04-2014 (Lu) ;*
U.S. Patent Application No. 14/379,057 *for METHOD OF USING CAMERA SENSOR INTERFACE TO TRANSFER MULTIPLE CHANNELS OF SCAN DATA USING AN IMAGE FORMAT filed August 15, 2014 (Wang et al*.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/460,387 for APPARATUS FOR DISPLAYING BAR CODES FROM LIGHT EMITTING DISPLAY SURFACES filed August 15, 2014 (Van Horn et al.);
U.S. Patent Application No. 14/460,829 for ENCODED INFORMATION READING TERMINAL WITH WIRELESS PATH SELECTON CAPABILITY, filed August 15, 2014 (Wang et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No.14/446,387 for INDICIA READING TERMINAL PROCESSING PLURALITY OF FRAMES OF IMAGE DATA RESPONSIVELY TO TRIGGER SIGNAL ACTIVATION filed July 30, 2014 (Wang et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 29/486,759 for an Imaging Terminal, filed April 2, 2014 (Oberpriller et al.);
U.S. Patent Application No. 29/492,903 for an INDICIA SCANNER, filed June 4, 2014 (Zhou et al.); and
U.S. Patent Application No. 29/494,725 for an IN-COUNTER BARCODE SCANNER, filed June 24, 2014 (Oberpriller et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A smartwatch comprising:
a camera;
barcode decoding software;
a user interface system, the user interface system being provided with a visual display on the smartwatch; and
a processor communicatively coupled to the camera, the user interface system, and the barcode decoding software, the processor being configured for a barcode scanning and decoding operation; the barcode scanning and decoding operation being configured for:
triggering a view finder on the smartwatch;
aligning a barcode in the view finder;
capturing images of the barcode aligned in the view finder with the camera;
feeding the barcode images to barcode decoding software; and
sending the decoded barcode information to the visual display.

2. The smartwatch of claim 1, further comprising a wireless communication system, the processor communicatively coupled to the wireless communication system.

3. The smartwatch of claim 2, wherein the processor is further configured for:
feeding the barcode images to a remote electronic device; and
receiving decoded barcode information from the remote electronic device.

4. The smartwatch of claim 3, wherein the processor is further configured for sharing and receiving data via RF links with remote electronic devices.

5. The smartwatch of claim 1, further comprising an operating system, wherein the processor is an application within the operating system.

6. The smartwatch of claim 1, wherein the barcode decoding software is capable of discerning different types of barcode symbologies and optical character recognition text.

7. A process for imaging and decoding a barcode with a wearable device, comprising:
triggering a wearable device to display a view finder;
aligning a barcode in the view finder;
capturing images of the barcode with a camera on the wearable device;
feeding camera frames of the barcode images to barcode decoding software;
decoding the barcode;
sending the decoded barcode information to the wearable device display; and
displaying decoded barcode information on the wearable device display.

8. The process of claim 7, wherein the wearable device is a smartwatch.

9. The process of claim 7, wherein the feeding step includes transmitting the barcode images to a remote device having the barcode decoding software.

10. The process of claim 7, wherein the barcode decoding software is resident on the wearable device.

11. The process of claim 7, wherein the triggering step is accomplished by a physical act by a wearer of the wearable device, the physical act being selected from a voice command, a swiping motion of a stylus on the wearable device display, a display touch, a touch gesture, and a physical motion of the wearable device.

12. The process of claim 7, wherein the triggering step is accomplished by a signal from a remote device to the wearable device.

13. The process of claim 7, wherein the sending step further includes sending the decoded barcode information to a remote electronic device for display.

14. The process of claim 7, wherein the sending step further includes sending the decoded barcode information to a remote device.

15. The process of claim 7, further comprising the step of: notifying a wearer of the wearable device of a successful decoding of the barcode, the notifying step being accomplished by an indicator selected from an audible signal from the wearable device, a visual signal on the display of the wearable device, a haptic response from the wearable device and an audible signal from a remote device, the remote device being linked to the wearable device via an RF link.
